(19) Europäisches Patentamt

European Patent Office

Office européen des brevets

(11) **EP 0 741 366 B1**

(12) **EUROPEAN PATENT SPECIFICATION**

(45) Date of publication and mention
of the grant of the patent:
**14.02.2001 Bulletin 2001/07**

(51) Int Cl.[7]: **G06J 1/00**

(21) Application number: **96106574.5**

(22) Date of filing: **25.04.1996**

(54) **Multiplication circuit**

Multiplizierschaltung

Circuit de multiplication

(84) Designated Contracting States:
**DE FR GB**

(30) Priority: **26.04.1995 JP 12570095
30.05.1995 JP 15529795**

(43) Date of publication of application:
**06.11.1996 Bulletin 1996/45**

(73) Proprietors:
• **YOZAN INC.**
**Tokyo 155 (JP)**
• **SHARP KABUSHIKI KAISHA**
**Osaka 545 (JP)**

(72) Inventors:
• **Shou, Guoliang**
**Setagaya-ku, Tokyo 155 (JP)**
• **Motohashi, Kazunori**
**Setagaya-ku, Tokyo 155 (JP)**
• **Luo, Jian**
**Setagaya-ku, Tokyo 155 (JP)**
• **Takatori, Sunao**
**Setagaya-ku, Tokyo 155 (JP)**
• **Yamamoto, Makoto**
**Setagaya-ku, Tokyo 155 (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 707 274          US-A- 5 457 417**

• **PATENT ABSTRACTS OF JAPAN vol. 095, no.
007, 31 August 1995 & JP 07 094957 A
(TAKAYAMA:KK), 7 April 1995,**

**Description**

The invention relates to a multiplication circuit according to the preamble part of claim 1.

Such a multiplication circuit is described in EP 707 274 A1 and comprises a plurality of weighting circuits. Each weighting circuit comprises a plurality of switching means, a group of capacitors, an inverting amplifier and a feedback capacitor. Each switching means connects a capacitor of the capacitor group either to an input voltage or to ground voltage.

The assignee of this invention proposes a multiplication circuit to multiply analog input voltage by digital multiplier in Japanese patent publication numbered 06-195483. In the multiplier, the input voltage is connected to a capacitive coupling consisting of a plurality of parallel capacitances which are selectively connected to the input voltage by switches for weighting of the input voltage. On the output side of the capacitive coupling, two stages of inverting amplifying portions in which feedback capacitances are connected to serial MOS inverters are connected and the linear characteristics of the output is guaranteed.

However, this multiplication circuit has a problem that a large capacity of capacitance is necessary when a large multiplier is set and the area of the circuit becomes large because the weighting is performed only by the capacitances of capacitive coupling.

Also with respect to a computer using multiplication circuit above, there is a case that the coordination of the input range and the output range is broken when the operation rout is complicated, therefore, the range should be positively adjusted. The applicant proposes a scaler circuit for adjusting the input and output range as an application circuit of a multiplication circuit in Japanese patent publication numbered 06-232650.

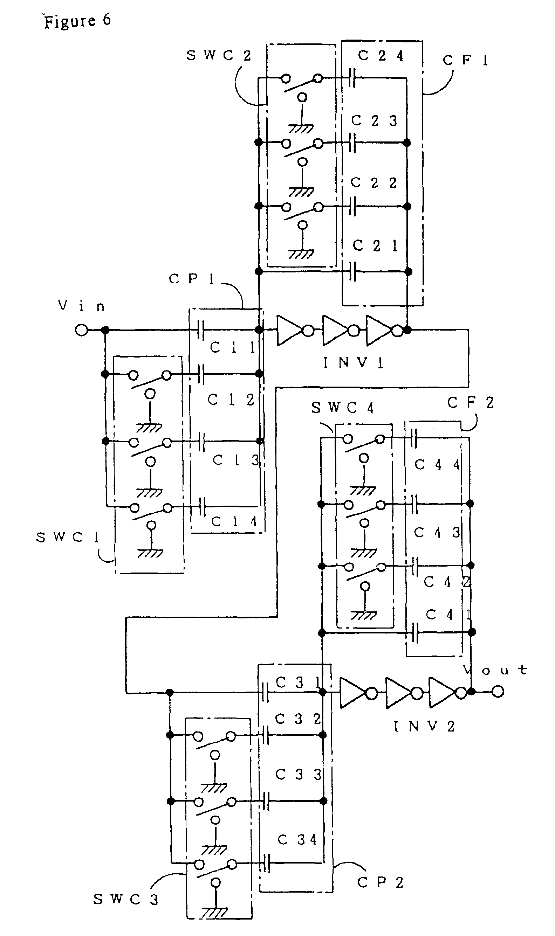

In the proposed circuit, input voltage Vin is connected through switch circuit SWC1 to a capacitive coupling CP1, whose output is input to an inverting amplifying portion INV1 as shown in Figure 6. The output of INV1 is input to a group CF1 of parallel feedback capacitances, whose output is connected to the input side of INV1 by switch circuit SWC2. Switch circuit SWC1 connects C11 to C14 of the capacitances of CP1 to Vin or a reference voltage, and switch circuit SWC2 connects the capacitors C21 to C24 of CF1 to the input of INV1 or the reference voltage. In this structure, when the total capacity of the capacitances connected to Vin by SWC1 ("effective composit capacity", hereinafter) are represented by $\Sigma C1i$, and the effective composit capacity of CF1 to be $\Sigma C2i$, the output V' of INV1 can expressed by the formula (1).

$$V' = -Vin \bullet \frac{\Sigma C1i}{\Sigma C2i} \tag{1}$$

The output of INV1 is connected to a similar inverting amplifying portion INV2, through switch circuit SWC3 and capacitive coupling CP2 (consisting of C31, C32, C33 and C34). The input of INV2 is connected to its output through feedback capacitance group CF2 and switch circuit SWC4. Representing an output of INV1 by V', Vout of the output of INV2 can be expressed as in formula (2) in the same way above.

$$Vout = -V' \bullet \frac{\Sigma C3i}{\Sigma C4i} \tag{2}$$

The output level is controlled by these weighting of formulas (1) and (2).

The offset voltage is set off by setting SWC2 to SWC4 so that the effective composit capacities of CF1, CP2 and CF2 are the same, and by setting that (C11+C12+C13+C14) is equal to (C31+C32+C33+C34).

The multiplier of the scaler circuit is defined according to the capacity of the capacitance. There was a problem that the circuit area becomes large because a capacitance is formed by connecting a plurality of unit capacitances on LSI, therefore, a large number of unit capacitances was necessary in order to realize a large multiplier. When there is a difference between input offset voltage and reference voltage, a large offset constituent arises and the performance of the circuit is deteriorated. Therefore, it was necessary to control the offset constituent of the output by finely adjusting the capacity of the capacitance.

It is the object of the present invention to provide a multiplication circuit which does not have the conventional disadvantages and requires less unit capacitances and less circuit area.

This object is solved by the multiplication circuit of claim 1.

Preferred embodiments of the invention are the subject-matter of the dependent claims.

One advantage of the present invention is that the product of multipliers of the successive multiplication circuits can be regarded as one multiplier thereby reducing the number of unit capacitances as well as circuit area.

Another advantage of the present invention is that a first inverting amplifier and a second inverting amplifier cancel out each other's offset voltage.

A further advantage of the present invention is an increased design flexibility.

In the following preferred embodiments of the present invention are described referring to the accompanying drawings.

Figure 1 shows a circuit of the first embodiment of the multiplication circuit of the present invention.

Figure 2 shows a circuit of the second embodiment as the scaler circuit.

Figure 3 shows a circuit of the inverting amplifying portion in the second embodiment.

Figure 4 shows a diagram of the reference voltage generating circuit in the second embodiment.

Figure 5 shows a variation of the second embodiment.

Figure 6 shows a conventional scaler circuit.

Hereinafter, the first embodiment of a multiplication circuit according to the present invention is described with reference to the drawings.

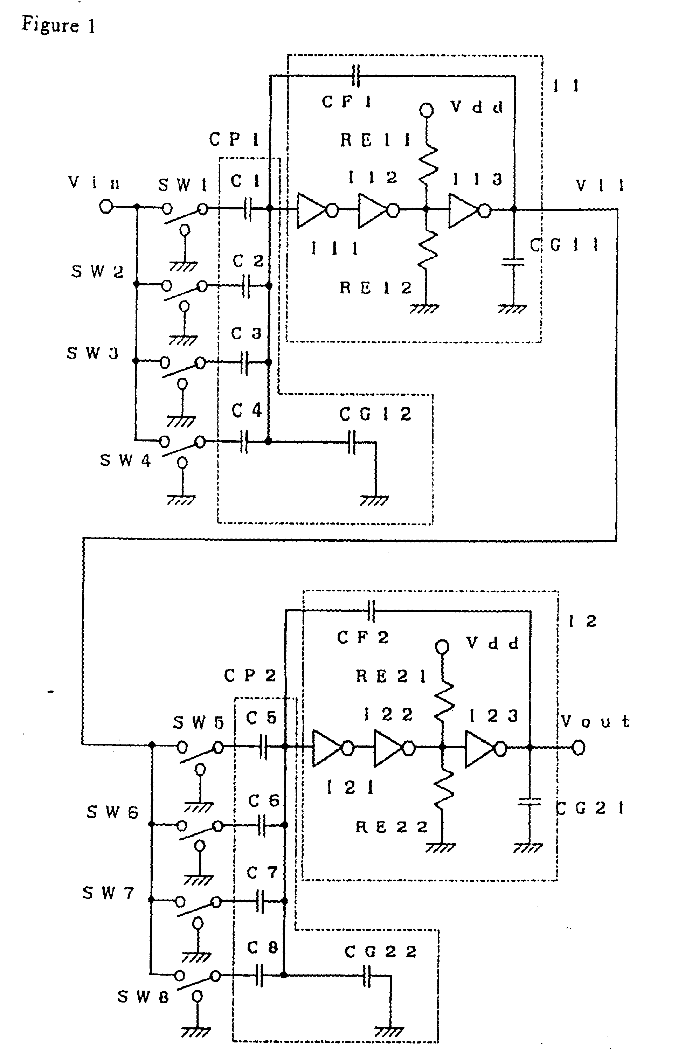

In Figure 1, the circuit includes a switch circuit having a plurality of switches of SW1, SW2, SW3 and SW4 parallelly connected to an input voltage. An output of the switch circuit is input to a capacitive coupling CP1 including a plurality of capacitances C1, C2, C3 and C4. That is, the outputs of each switch SW1, SW2, SW3 and SW4 is connected to capacitances C1, C2, C3 and C4, respectively. The capacitances are selectively connected by the switches to the input voltage. The inputs of switches SW1 to SW4 are alternatively connected to the input voltage or the ground, so Vin or 0V is impressed on the capacitances.

An output of the capacitive coupling CP1 is input to an inverting amplifying portion I1. The voltage output of a capacitive coupling is transmitted to the next stage with good linearity and driving ability.

Inverting amplifying portion I1 consists of three stages of MOS inverters I11, I12 and I13, serially connected. An output of MOS inverter I13 on the last stage is fed back to an input of I1 by a feedback capacitance CF1. The serial circuit of MOS inverters has a gain large enough. The input and output becomes coincident by feeding back the output to the input, consequently, it is possible to stably provide the inverted output of an input independently from the load of circuits on the next stage.

The output of MOS inverter I13 is connected to a grounded capacitance CG11, through which it is grounded. The output of MOS inverter I12 is connected to resistances RE11 and RE12. RE11 connects a supply voltage Vdd to the output of I12 and RE12 connects the output of I12to the ground.

These resistances RE11 and RE12 forms balancing resistance in pairs and contribute to prevent unstable oscillation.

The output of inverting amplifing portion I1 is input to the switch circuit consisting of a plurality of switches SW5, SW6, SW7 and SW8. The output of the inverting amplifying portion is connected to each switch in the switch circuit. An output of the switch circuit is input to a capacitive coupling CP2 consisting of a plurality of capacitances C5, C6, C7 and C8. That is, the outputs of switches SW5, SW6, SW7 and SW8 are connected to capacitances C5, C6, C7 and C8, respectively. The capacitances are selectively connected by switches to the output of the inverting amplifying portion I1.

The output of capacitive coupling CP2 is input to an inverting amplifying portion I2. The voltage output of the capacitive coupling is transmitted to the next stage with good linearity and driving ability.

In inverting amplifying portion I2, three stages of MOS inverters I21, I22 and I23 are connected in serial. An output of the last stage of MOS inverter I23 is fed back to an input of I2 by a feedback capacitance CF2. Accordingly, the input of CP2 can be inverted and output with good linearity and driving ability similarly to I1.

Also in inverting amplifying portion I2, grounded capacitance CG21, balancing resistance RE21 and RE22 are connected as in I1, which prevent unstable oscillation.

To the capacitive coupling CP1, a grounded capacitance CG12 is connected parallelly with C1 to C4, an input of which is connected to the ground instead of Vin. To the capacitive coupling CP2, a grounded capacitance CG22 is connected parallelly with C5 to C8, an input of which is connected to the ground instead of the output of I1.

In the state that all switches SW1 to SW8 are closed, the output V1 of I1 is expressed in the formula (3). When an offset voltage Vb caused at the connecting points of CG12 and CG22 by voltages V' inputted these capacitances,

$$Vb = \frac{CG12 \cdot V'}{CF1} = \frac{CG22 \cdot V'}{CF2}.$$

$$VI1 + Vb = \frac{-Vin(C1 + C2 + C3 + C4)}{CF1} \tag{3}$$

On the other hand, Vout of the output of I2 is as in the formula (4).

$$Vout + Vb = \frac{-VI1(C5 + C6 + C7 + C8)}{CF2} \tag{4}$$

The formulas (3) and (4) can be combined as the formula (5). In this combination, Vb can be deleted because it is usually designated that

$$\frac{(C1 + C2 + C3 + C4)}{CF1} = \frac{(C5 + C6 + C7 + C8)}{CF2} = 1.$$

$$Vout = \frac{Vin\ (C1 + C2 + C3 + C4)(C5 + C6 + C7 + C8)}{CF1 \cdot CF2} \tag{5}$$

Here, the effective composite capacity of the capacitances connected by switches is expressed by $\Sigma\ C1i$ with respect to C1 to C4, and $\Sigma\ C2i$ with respect to C5 to C8, general multiplication can be defined. For example SW1, SW3 and SW6 are closed, $\Sigma\ C1i$ and $\Sigma\ C2i$ are as in formulas (6) and (7), respectively.

$$\Sigma C1i = C1 + C3 \tag{6}$$

$$\Sigma C2i = C6 \tag{7}$$

According to the generalization above, the multiplication can be expressed by formula (8).

$$Vout = \frac{Vin(\Sigma C1i \cdot \Sigma C2i)}{CF1 \cdot CF2} \tag{8}$$

As can be seen from formula (8), the capacity of the capacitances can be prevented from being large and multiplication of large multipliers can be performed.

The ratio of the capacities is settled as C1:C2:C3:C4=1:2:4:8. The multiplication with a binary multiplier can be performed by setting the effective composite capacity. The capacitance C5 to C8 are similarly set.

Grounded capacitances CG12 and CG22 are effective to control the maximum value of the multiplier and the linearity of the outputs can be improved. For example the ratios are C1:C2:C3:C4:CG12:CF1 = 1:2:4:8:1:16 and C5:C6:C7:C8:CG22:CF2 = 1:2:4:8:1:16, the maximum of the output is limited to be (15/16) $\times$ (15/16) As designing of the multiplier becomes easier when such grounded capacitances are omitted, there is a case to omit them in the actual circuit.

Next, the second embodiment of scaler circuit as an application of the multiplication circuit is described with reference to the attached drawings.

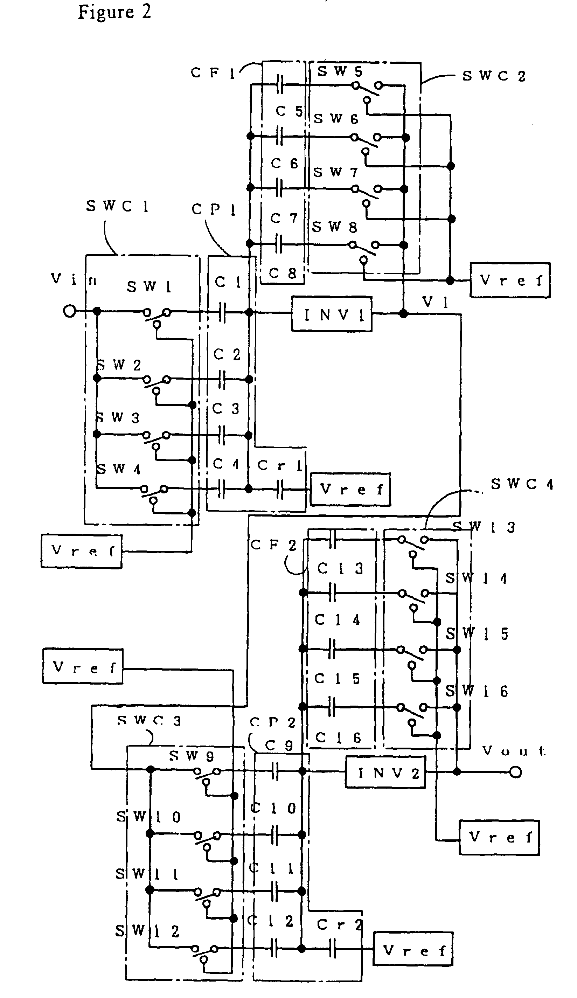

In Figure 2, the scaler circuit consists of a switch circuit SWC1, capacitive coupling CP1, inverting amplifying portion INV1, switch circuit SWC3, capacitive coupling CP2 and inverting amplifying portion INV2, connected in series. An input voltage Vin is connected to the switch circuit SWC1.

Switch circuit SWC1 includes a plurality of switches SW1, SW2, SW3 and SW4 for alternatively connecting Vin or a reference voltage to its output. The reference voltage is generated by a reference voltage generating circuit Vref, and the half voltage of the common supply voltage Vdd, that is $\frac{Vdd}{2}$ is generated in the whole circuit. Capacitive coupling CP1 is structured by integrating the outputs of capacitances C1, C2, C3 and C4 which are connected to switches SW1 to SW4, respectively. The output of CP1 is input to INV1. Switch circuit SWC1 alternatively impresses Vin or the reference voltage to each capacitance of capacitive coupling CP1, and the integrated outputs are input to INV1.

To the output of inverting amplifying portion INV1, a switch circuit SWC2 is connected, which consists of a plurality of switches SW5, SW6, SW7 and SW8 connected to INV1 in parallel. To SWC2, a group CF1 of feedback capacitances is connected, which consists of a plurality of capacitances C5, C6, C7 and C8 connected to SWC2 in parallel. The outputs of C5 to C8 are integrated and connected to the input of INV1, and each switches from SW5 to SW8 alternatively connects the output of INV1 or the reference voltage to the corresponding capacitances among C5 to C8, respectively.

To the capacitive coupling CP1, reference voltage capacitance Cr1 is connected parallelly to capacitances from C1 to C4. To Cr1, a reference voltage generating circuit Vref is constantly connected. A reference voltage capacitance similar to Cr1 is used in another multiplication circuit, and these capacitances are effective for equivalence of the multiplication circuits and common use of the circuit pattern.

Reference voltage generating circuit Vref and inverting amplifying portion INV1 are described in detail later. These circuits mainly have the component of three stages of serial MOS inverters, and there is a possibility that offset voltage Voff is included in the reference voltage and input of INV1. Therefore, the MOS inverters in the reference voltage generating circuit and in inverting amplifying portion are designated for the same characteristics, and they are adjacently placed on LSI. Consequently, the offset voltage of each MOS inverter becomes equal to one another so that offset voltages are canceled off in capacitive couplings CP1, CP2 and feedback capacitance group, as mentioned later.

To the output of the inverting amplifying portion INV1, a switch circuit SWC2 is connected, which consists of a plurality of switches of SW5, SW6, SW7 and SW8 parallelly connected to INV1. To SWC2, a feedback capacitance group CF1 is connected, which consist of a plurality of capacitances C5, C6, C7 and C8, parallelly connects to SWC2. The output of C5 to C8 are integrated and connected to the input of INV1, and switches from SW5 to SW8 alternatively connect the output of INV1 or the reference voltage to the corresponding capacitance among C5 to C8, respectively.

Here, the sum of the capacity of the capacitances connected to Vin among C1 to C4 is defined as the effective composite capacity of CP1 and expressed by $\Sigma$ (CP1), and the sum of the capacity of the capacitances connect to the output of INV1 in feedback capacitance group CF1 is defined as effective composite capacity and expressed by $\Sigma$ (CF1). The total sum of the capacities of C1 to C4 is expressed by T(CP1) and the total sum of the capacity of C5 to C8 is expressed by T(CF1). Further, formulas (9) and (10) are assumed to be true.

$$T(CP1)- \Sigma (CP1)=S(CP1) \tag{9}$$

$$T(CF1)- \Sigma (CF1)=S(CF1) \tag{10}$$

In the structure above, expressing an output of INV1 to be V1, offset voltage in the input side of INV1 to be Voff and the reference voltage Vref, formula (11) is true.

$$\Sigma (CP1)(Vin-Voff) + \Sigma (CF1)(V1 - Voff)+S(CP1)(Vref-Voff)$$

$$+S(CF1)(Vref-Voff)=0 \tag{11}$$

from formula (11), formula (12) can be obtained.

$$V1 - Voff = -\frac{\Sigma CP1}{\Sigma CF1}\bullet(Vin - Voff) - \frac{S(CP1) + S(CF1)}{\Sigma CF1}\bullet(Vref - Voff) \tag{12}$$

As (Vref-Voff) is extremely small (0.1mV order), formula (12) is substantially the same as formula (13).

$$V1 - Voff = -\frac{\Sigma CP1}{\Sigma CF1}\bullet(Vin - Voff) \tag{13}$$

Switch circuit SWC3 consists of a plurality of switches SW9, SW10, SW11 and SW12 parallelly connected, and the capacitive coupling CP2 consists of parallel capacitances C9, C10, C11, C12 and Cr2. Each switch from SW9 to SW12 are connected to corresponding capacitance among C9 to C12, and the output of INV1 or the ground is alternatively connected to the corresponding capacitance. Cr2 is the equivalent reference voltage capacitance as the above Cr1 and is connected to reference voltage generation circuit Vref.

Switch circuit SWC3 alternatively impresses Vin or the reference voltage on each capacitance of the capacitive coupling CP2. The integrated output is input to INV2.

To the output of inverting amplifying portion INV2, a switch circuit SWC4 is connected, which consists of a plurality of switches SW13, SW14, SW15 and SW16 connected in parallel. To SWC4, a feedback capacitance group CF2 is connected, which consist of a plurality of capacitances C13, C14, C15 and C16 connected in parallel. The outputs of switches SW13 to SW16 are integrated and input to the input of INV2, and each switch SW13 to SW16 alternatively connects the output of INV2 of the reference voltage to the corresponding capacitance among C13 to C16.

Here, the sum of the capacity of the capacitances connected to V1 among C9 to C12 is called the effective composite capacity of CP2 and expressed by $\Sigma$ (CP2), and the sum of the capacity of the capacitances connect to the output of INV2 in feedback capacitance group CF2 is called effective composite capacity and expressed by $\Sigma$ (CF2). The total sum of the capacities of C9 to C12 is expressed by T(CP2) and the total sum of the capacity of C13 to C16 is expressed by T(CF2). Further, formulas (14) and (15) are assumed to be true.

$$T(CP2)- \Sigma (CP2)=S(CP2) \tag{14}$$

$$T(CF2)- \Sigma (CF2)=S(CF2) \tag{15}$$

In the structure above, expressing the output of INV2 to be Vout, offset voltage in the input side of INV2 to be Voff equal to the offset voltage of the input side of INV1, and the reference voltage Vref, the formula (16) is true.

$$\Sigma (CP2)(V1-Voff)+ \Sigma (CF2)(Vout-Voff)+S(CP2)(Vref-Voff)$$

$$+S(CF2)(Vref-Voff)=0 \tag{16}$$

Formula (16) can be simplified as the following formula (17) by ignoring (Vref-Voff) in the same way as in formula (13).

$$Vout - Voff = - \frac{\Sigma CP2}{\Sigma CF2} \cdot (V1 - Voff) \tag{17}$$

From formula (13) and (17), formula (18) can be obtained.

$$Vouf - Voff = \frac{\Sigma CP1}{\Sigma CF1} \cdot \frac{\Sigma CP2}{\Sigma CF2} (Vin - Voff) \tag{18}$$

In formula (18), two multipliers of $\frac{\Sigma CP1}{\Sigma CF1}$ and $\frac{\Sigma CP2}{\Sigma CF2}$ are multiplied to (Vin-Voff). Therefore, a result can be obtained of a multiplication by multiplier to (Vin Voff), with limiting each multiplier to be small.

Since the offset voltage Voff can be estimated in advance, it is sufficiently possible to adjust the output level by using scaler circuit considering the Voff.

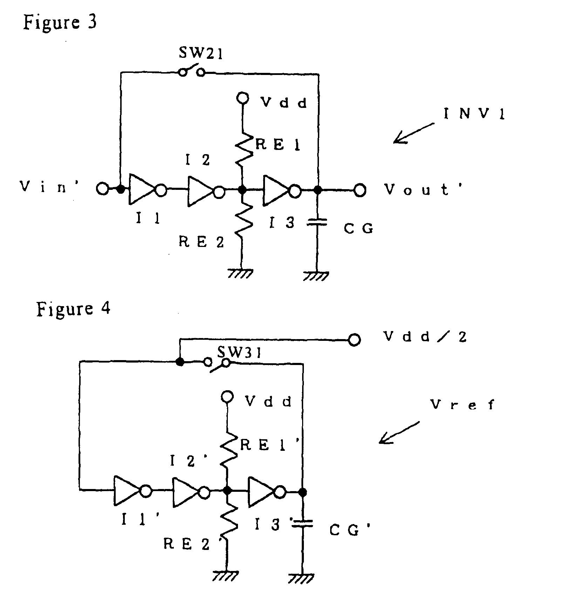

In Figure 3, inverting amplifying portion INV1 consists of three stages of serial MOS inverters I1, I2 and I3 and a high gain given by the product of gains of these inverters. The output of INV1 is fed back to its input by the above feedback capacitance group CF1, and good linearity in the relationship between input and output is guaranteed. Though an unstable oscillation sometimes occurs when inverted amplified signal of high gain is fed back, it can be prevented by connecting capacitance CG connected to ground to the output of MOS inverter I3 in the last stage, and by connecting balancing resistances RE1 and RE2 connected to the supply and reference voltages Vdd and ground, respectively. To inverting amplifying portion INV1, a refresh switch SW21 for short-circuiting the input and output is connected. The offset voltage on the input side of inverting amplifying portion is canceled by timely closing refresh switch 21 and at the same time connecting switches from SW1 to SW4 and from SW9 to SW12 to Vref. As inverting amplifying portion INV2 is the same structure as that of INV1, the description is omitted.

In Figure 4, reference voltage generating circuit Vref includes MOS inverters I1', I2' and I3', an output of the last inverter is fed back to an input of the first inverter. Closed dummy switch (never opened) SW31 is placed on the feedback line. Consequently, the circuit pattern of the reference voltage generating circuit can be structured in the same way as inverting amplifying portion INV1 above (including switches), and the electric characteristics especially the offset voltage is equivalent thereto. Moreover, the reference voltage generating circuit is processed to prevent the unstable oscillation by capacitance CG' and balancing resistances RE1' and RE2' similarly to the inverting amplifying portion INV1. When the characteristics of input and output of three stages of the whole inverters are expressed as y=f (x) assuming input is x and output is y, x=f(x) is true according to the relationship of x=y by connecting the output to the input. The characteristics of each MOS inverter, especially the threshold is set so as to obtain x=Vdd/2 which is to be the solution of x=f(x).

The reference voltage determined in such a way is theoretically the same as that of offset voltage Voff above. The difference between them can be ignored as a small error.

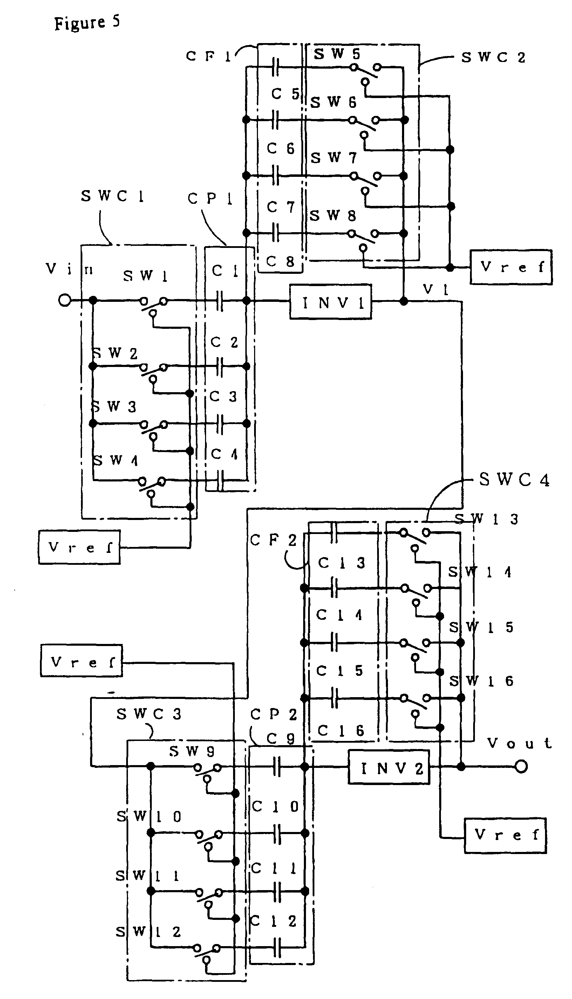

Figure 5 shows a variation of the embodiment above. In the figure, the reference voltage generating circuit Vref connected to capacitive couplings CP1 and CP2, and capacitances Cr1 and Cr2 for connecting them are omitted. Though the merit of equivalence to the multiplication circuit and the pattern commonage is lost, the circuit is simplified and the bad influence of Cr1 and Cr2 on the accuracy of operation can be avoided.

In a multiplication circuit of the present invention, capacitive couplings are connected to the first and the second inverting amplifying portion, respectively, and capacitances of the capacitive couplings are selectively connected by switches. Two steps of multiplication are realized by almost the same size of conventional circuit. Therefore, each capacity of the capacitances can be set smaller and the area of the circuit for forming capacitance can be reduced.

In the scaler circuit of the present invention, 1) odd number of MOS inverters are connected in serial, 2) a grounded capacitance is connected between an output of the last stage of MOS inverters and the ground, 3) an output of MOS inverters is connected to a supply voltage and the ground by a pair of balancing resistances, respectively, in the former stage than the last stage of MOS inverter, 4) a reference voltage is generated as an output of a reference voltage generating circuit which consists of odd number of MOS inverters serially connected, an output of the last stage MOS inverter being fed back to an input of the first stage inverter, 5) the MOS inverter of the reference voltage generating circuit and the MOS inverter of the first and the second inverting amplifying portions are settled on the same circuit characteristics as well as adjacently placed on a LSI. The accuracy of the output is improved because the number of the unit capacitances is controlled due to the two stages of weighting and controlling the capacity of the first inverting amplifying portion and the second inverting amplifying portion, and the offset voltage of the MOS inverters of the reference voltage generating circuit and the inverting amplifying portion are canceled out. As the structure of the reference voltage generating circuit is similar to that of the inverting amplifying circuit, the difference between the reference voltage and the offset voltage can be controlled as the minimum.

**Claims**

**1.** A multiplication circuit for multiplying an analog input voltage (Vin) by a digital value comprising:

a first switching circuit (SWC1) having a plurality of switches (SW1 ...SW4);

a first capacitive coupling (CP1) having a plurality of capacitors (C1...C4) corresponding to said switches (SW1...SW4) of said first switching circuit (SWC1), each of said capacitors (C1...C4) being connected to an output to said corresponding switch;

a first inverting amplifier (INV1) which comprises an odd number of MOS inverters (I11, I12, I13) serially connected, an input of said first inverting amplifier (I11) being connected to an output terminal of each said capacitor of said first capacitive coupling (CP1);

a second switching circuit (SWC3) having a plurality of switches (SW9...SW12);

a second capacitive coupling (CP2) having a plurality of capacitors (C9...C12) corresponding to said switches (SW9...SW12) of said second switching circuit (SWC3), each of said capacitors (C9...C12) being connected to an output to said corresponding switch, and

a second inverting amplifier (INV2) which comprises an odd number of MOS inverters (I21, I22, I23) serially connected, an input of said second inverting amplifier (INV2) being connected to an output terminal of each said capacitor of said second capacitive coupling (CP2),

whereby said analog input voltage (Vin) is multiplied twice by said first and second capacitive couplings (CP1, CP2),

**characterized in that**

the multiplication circuit further comprises a reference voltage generating circuit (Vref), for generating a reference voltage, respective components of said reference voltage generating circuit and said inverting amplifiers being settled on the same circuit characteristics;

each of said switches (SW1...SW4) of said first switching circuit (SWC1) are connected to said analog input voltage (Vin) and said reference voltage (Vdd/2);

each of said switches (SW9...SW12) of said second switching circuit (SWC3) are connected to an output of said first inverting amplifier (INV1) and said reference voltage.

**2.** A multiplication circuit as claimed in claim 1, further comprising grounded capacitors (CG) connected between an output of said first inverting amplifier (INV1) and a ground and between an output of said second inverting amplifier (INV2) and said ground;

a first voltage divider having a first and a second resistor (RE11, RE12), said first resistor (RE11) being connected between an output of one of said MOS inverters other than the last (I13) of said MOS inverters of said first inverting amplifier (INV1) and a supply voltage (Vdd), said second resistor (RE12) being connected between said output and said ground;

a second voltage divider having a first and a second resistor (RE21, RE22), said first resistor (RE21) being connected between an output of one of said MOS inverters other than the last (I23) of said MOS inverters of said second inverting amplifier (INV2) and said supply voltage (Vdd), said second resistor (RE22) being connected between said output and said ground;

a first feedback capacitor (CF1) for connecting said output and input of said first inverting amplifiers (INV1); and

a second feedback capacitor (CF2) for connecting said output and input of said second inverting amplifiers (INV2).

3. A multiplication circuit as claimed in claim 2, wherein said first and second capacitive coupling (CP1, CP2) have capacitances (C1...C4, C9...C12) corresponding to weights of digits of a binary number.

4. A multiplication circuit as claimed in claim 3, wherein each of said first and second capacitive couplings (CP1, CP2) further comprises an additional capacitor (CG12, CG22) having a capacitance equal to said capacitance of said capacitor of the least significant bit of said binary number, an input terminal of said additional capacitor (CG12, CG22) being connected to said ground.

5. A multiplication circuit as claimed in one of claims 2 to 4, wherein said first and second feedback capacitor (CF1, CF2) have capacitances equal to total capacitances of said first and second capacitive coupling (CP1, CP2), respectively.

6. A multiplication circuit as claimed in claim 1, further comprising:

a first group of feedback capacitors (CF1), an output terminal of each capacitor of said first group (CF1) being connected to said capacitors (C1...C4) of said first capacitive coupling (CP1);

a third switching circuit (SWC2) having a plurality of switches (SW5...SW8) corresponding to said capacitors (C5...C8) of said first group (CF1), each said switch connecting an input terminal of the corresponding capacitor either to an output terminal of said first inverting amplifier (INV1) or said reference voltage (Vdd/2);

a second group of feedback capacitors (CF2), an output terminal of each capacitor of said second group (CF2) being connected to said capacitors (C9...C12) of said second capacitive coupling (CP2);

said reference voltage generating circuit (Vref) comprising:

a) an odd number of MOS inverters (I1', I2', I3') serially connected and formed adjacent to said MOS inverters of said first and second inverting amplifier (INV1, INV2),

b) a grounded capacitor (CG') connected between an output of the last (I3') of said MOS inverters and a ground,

c) a voltage divider having a first and second resistor (RE1', RE2'), said first resistor (RE1') being connected between an output of one of said MOS inverters other than said last (I3') of said MOS inverters and a supply voltage (Vdd), said second resistance (RE2') being connected between said output and said ground, and

d) a feedback line connecting said output of the last (I3') of said MOS inverters to an input of the first (I1') of said MOS inverters.

7. A multiplication circuit as claimed in claim 6, further comprising:

grounded capacitors (CG) connected between an output of said first inverting amplifier (INV1) and said ground and between an output of said second inverting amplifier (INV2) and the ground;

a first voltage divider having a first and a second resistor (RE1, RE2), said first resistor (RE1) being connected between an output of one of said MOS inverters other than the last (I3) of said MOS inverters of said first inverting amplifier (INV1) and a supply voltage (Vdd), said second resistance (RE2) being connected between said output and said ground; and

a second voltage divider having first and second resistances (RE1, RE2), said first resistance (RE1 ) being connected between an output of one of said MOS inverters other than the last (13) of said MOS inverters of said second inverting amplifier (INV2) and said supply voltage (Vdd), said second resistance (RE2) being connected between said output and said ground.

8. A multiplication circuit as claimed in one of claims 1 to 7, wherein said reference voltage is a half of said supply voltage (Vdd).

9. A multiplication circuit as claimed in one of claims 1 to 8, further comprising refreshing switches (SW21) for connecting said input and output of said first and second inverting amplifiers (INV1, INV2), respectively, and a dummy switch (SW31) equivalent to said refreshing switch and for constantly connecting said output of said last of said MOS inverters (I3') and said input of said first of said MOS inverters (I1') in said reference voltage generating circuit (Vref).

**Patentansprüche**

1. Multiplikationsschaltung zum Multiplizieren einer analogen Eingangsspannung (Vin) mit einem digitalen Wert, wobei die Multiplikationsschaltung umfasst:

eine erste Schaltschaltung (SWC1) mit einer Vielzahl von Schaltern (SW1, ... SW4),

eine erste kapazitive Kopplung (CP1) mit einer Vielzahl von Kondensatoren (C1, ... C4), die jeweils den Schaltern (SW1, ... SW4) der ersten Schaltschaltung (SWC1) entsprechen, wobei jeder der Kondensatoren (C1, ... C4) mit einem Ausgang des entsprechenden Schalters verbunden ist,

einen ersten Umkehrverstärker (INV1), der eine ungerade Anzahl von MOS-Umkehrern (I11, I12, I13) umfasst, die in Reihe verbunden sind, wobei ein Eingang des ersten Umkehrverstärkers (I11) mit einem Ausgangsanschluss von jedem der Kondensatoren der ersten kapazitiven Kopplung (CP1) verbunden ist,

eine zweite Schaltschaltung (SWC3) mit einer Vielzahl von Schaltern (SW9, ... SW12),

eine zweite kapazitiven Kopplung (CP2) mit einer Vielzahl von Kondensatoren (C9,... C12), die den Schaltern (SW9, ... SW12) der zweiten Schaltschaltung (SWC3) entsprechen, wobei jeder der Kondensatoren (C9, ... C12) mit einem Ausgang des entsprechenden Schalters verbunden ist, und

einen zweiten Umkehrverstärker (INV2), der eine ungerade Anzahl von MOS-Umkehrem (I21, I22, I23) umfasst, die in Reihe verbunden sind, wobei ein Eingang des zweiten Umkehrverstärkers (INV2) mit einem Ausgangsanschluss von jedem der Kondensatoren der zweiten kapazitiven Kopplung (CP2) verbunden ist,

wobei die analoge Eingangsspannung (Vin) zweimal durch die erste und die zweite kapazitive Kopplung (CP1, CP2) multipliziert wird,

dadurch gekennzeichnet, dass

die Multiplikationsschaltung weiterhin eine Bezugsspannung-Erzeugungsschaltung (Vref) zum Erzeugen einer Bezugsspannung umfasst, wobei entsprechende Komponenten der Bezugsspannung-Erzeugungsschaltung und der Umkehrverstärker mit denselben Schaltungseigenschaften eingestellt werden,

jeder der Schalter (SW1, ... SW4) der ersten Schaltschaltung (SWC1) mit der analogen Eingangsspannung (Vin) und der Bezugsspannung (Vdd/2) verbunden ist, und

jeder der Schalter (SW9, ... SW12) der zweiten Schaltschaltung (SWC3) mit einem Ausgang des ersten Umkehrverstärkers (INV1) und der Bezugsspannung verbunden ist.

**2.** Multiplikationsschaltung nach Anspruch 1, die weiterhin geerdete Kondensatoren (CG) umfasst, die zwischen einem Ausgang des ersten Umkehrverstärkers (INV1) und einer Erde und zwischen einem Ausgang des zweiten Umkehrverstärkers (INV2) und der Erde verbunden sind,

einen ersten Spannungsteiler mit einem ersten und einem zweiten Widerstand (RE11, RE12), wobei der erste Widerstand (RE11) zwischen einem Ausgang von einem anderen als dem letzten MOS-Umkehrer (I13) des ersten Umkehrverstärkers (INV1) und einer Versorgungsspannung (Vdd) verbunden ist, während der zweite Widerstand (RE12) zwischen dem Ausgang und der Erde verbunden ist,

einen zweiten Spannungsteiler mit einem ersten und einem zweiten Widerstand (RE21, RE22), wobei der erste Widerstand (RE21) zwischen einem Ausgang von einem anderen als dem letzten MOS-Umkehrer (I23) des zweiten Umkehrverstärkers (INV2) und der Versorgungsspannung (Vdd) verbunden ist, während der zweite Widerstand (RE22) zwischen dem Ausgang und der Erde verbunden ist,

einen ersten Rückkopplungskondensator (CF1) zum Verbinden des Ausgangs mit dem Eingang der ersten Umkehrverstärker (INV1), und

einen zweiten Rückkopplungskondensator (CF2) zum Verbinden des Ausgangs mit dem Eingang des zweiten Umkehrverstärkers (INV2).

**3.** Multiplikationsschaltung nach Anspruch 2, wobei die erste und die zweite kapazitive Kopplung (CP1, CP2) Kapazitäten (C1, ... C4, C9, ... C12) aufweisen, die den Gewichten von Stellen einer binären Zahl entsprechen.

**4.** Multiplikationsschaltung nach Anspruch 3, wobei die erste und die zweite kapazitive Kopplung (CP1, CP2) jeweils einen zusätzlichen Kondensator (CG12, CG22) mit einer Kapazität gleich der Kapazität des Kondensators des niedrigstwertigen Bits der binären Zahl aufweisen, wobei ein Eingangsanschluss des zusätzlichen Kondensators (CG12, CG22) mit der Erde verbunden ist.

**5.** Multiplikationsschaltung nach wenigstens einem der Ansprüche 2 bis 4, wobei der erste und der zweite Rückkopplungskondensator (CF1, CF2) jeweils Kapazitäten gleich den Gesamtkapazitäten der ersten und der zweiten kapazitiven Kopplung (CP1, CP2) aufweisen.

**6.** Multiplikationsschaltung nach Anspruch 1, die weiterhin umfasst:

eine erste Gruppe von Rückkopplungskondensatoren (CF1), wobei ein Ausgangsanschluss von jedem Kondensator der ersten Gruppe (CF1) mit den Kondensatoren (C1, ... C4) der ersten kapazitiven Kopplung (CP1) verbunden ist,

eine dritte Schaltschaltung (SWC2) mit einer Vielzahl von Schaltern (SW5, ... SW8), die den Kondensatoren (C5, ... C8) der ersten Gruppe (CF1) entsprechen, wobei jeder Schalter einen Eingangsanschluss des entsprechenden Kondensators mit entweder dem Ausgangsanschluss des ersten Umkehrverstärkers (INV1) oder mit der Bezugsspannung (Vdd/2) verbindet,

eine zweite Gruppe von Rückkopplungskondensatoren (CF2), wobei ein Ausgangsanschluss von jedem Kondensator der ersten Gruppe (CF2) mit den Kondensatoren (C9,... C12) der ersten kapazitiven Kopplung (CP2) verbunden ist,

wobei die Bezugsspannung-Erzeugungsschaltung (Vref) umfasst:

a) eine ungerade Anzahl von MOS-Umkehrem (I1', I2', I3'), die in Reihe verbunden und in Nachbarschaft zu den MOS-Umkehrem des ersten und zweiten Umkehrverstärers (INV1, INV2) ausgebildet sind,

b) einen geerdeten Kondensator (CG'), der zwischen einem Ausgang des letzten (I3') MOS-Umkehrers und einer Erde verbunden ist,

c) einen Spannungsteiler mit einem ersten und einem zweiten Widerstand (RE1', RE2'), wobei der erste Widerstand (RE1') zwischen einem Ausgang von einem anderen als dem letzten MOS-Umkehrer (I3') und einer Versorgungsspannung (Vdd) verbunden ist, während der zweite Widerstand (RE2') zwischen dem Ausgang und der Erde verbunden ist, und

d) einer Rückkopplungsleitung, die den Ausgang des letzten (I3') MOS-Umkehrers mit einem Eingang des ersten (I1') MOS-Umkehrers verbindet.

**7.** Multiplikationsschaltung nach Anspruch 6, die weiterhin umfasst_

geerdete Kondensatoren (CG), die zwischen einem Ausgang des ersten Umkehrverstärkers (INV1) und der Erde und zwischen einem Ausgang des zweiten Umkehrverstärkers (INV2) und der Erde verbunden sind,

einen ersten Spannungsteiler mit einem ersten und einem zweiten Widerstand (RE1, RE2), wobei der erste Widerstand (RE1) zwischen einem Ausgang von einem anderen als dem letzten MOS-Umkehrer (I3) des ersten Umkehrverstärkers (INV1) und einer Versorgungsspannung (Vdd) verbunden ist, während der zweite Widerstand (RE2) zwischen dem Ausgang und der Erde verbunden ist,

einen zweiten Spannungsteiler mit einem ersten und einem zweiten Widerstand (RE1, RE2), wobei der erste Widerstand (RE1) zwischen einem Ausgang von einem anderen als dem letzten MOS-Umkehrer (I3) des zweiten Umkehrverstärkers (INV2) und der Versorgungsspannung (Vdd) verbunden ist, während der zweite Widerstand (RE2) zwischen dem Ausgang und der Erde verbunden ist.

**8.** Multiplikationsschaltung nach wenigstens einem der Ansprüche 1 bis 7, wobei die Bezugsspannung gleich der halben Versorgungsspannung (Vdd) ist.

**9.** Multiplikationsschaltung nach wenigstens einem der Ansprüche 1 bis 8, die weiterhin jeweils Auffrischungsschalter (SW21) zum Verbinden des Eingangs und des Ausgangs des ersten und des zweiten Umkehrverstärkers (INV1, INV12) sowie einen Dummyschalter (SW31) umfasst, der dem Auffrischungsschalter äquivalent ist und zum konstanten Verbinden des Ausgangs des letzten MOS-Umkehrers (I3') mit dem Eingang des ersten MOS-Umkehrers (I1') in der Bezugsspannung-Erzeugungsschaltung (Vref) dient.

## Revendications

**1.** Circuit de multiplication destiné à multiplier une tension d'entrée analogique (Vin) par une valeur numérique, comprenant :

un premier circuit de commutation (SWC1) ayant une pluralité de commutateurs (SW1...SW4) ;
un premier couplage capacitif (CP1) ayant une pluralité de condensateurs (C1...C4) correspondant auxdits commutateurs (SW1...SW4) dudit premier circuit de commutation (SWC1), chacun desdits condensateurs (C1...C4) étant connecté à une sortie dudit commutateur correspondant ;
un premier amplificateur inverseur (INV1) qui comprend un nombre impair d'inverseurs MOS (I11, I12, I13) connectés en série, une entrée dudit premier amplificateur inverseur (I11) étant connectée à une borne de sortie de chaque dit condensateur dudit premier couplage capacitif (CP1) ;
un second circuit de commutation (SWC3) ayant une pluralité de commutateurs (SW9...SW12) ;
un second couplage capacitif (CP2) ayant une pluralité de condensateurs (C9...C12) correspondant auxdits commutateurs (SW9...SW12) dudit second circuit de commutation (SWC3), chacun desdits condensateurs (C9...C12) étant connecté à une sortie dudit commutateur correspondant, et
un second amplificateur inverseur (INV2) qui comprend un nombre impair d'inverseurs MOS (I21, I22, I23) connectés en série, une entrée dudit second amplificateur inverseur (INV2) étant connectée à une borne de sortie de chaque dit condensateur dudit second couplage capacitif (CP2),
de sorte que ladite tension d'entrée analogique (Vin) est multipliée à deux reprises par lesdits premier et second couplages capacitifs (CP1, CP2),

caractérisé en ce que

le circuit de multiplication comprend, en outre, un circuit générateur de tension de référence (Vref) destiné à générer une tension de référence, les composants respectifs dudit circuit générateur de tension de référence et desdits amplificateurs inverseurs étant réglés sur des caractéristiques de circuit identiques ;
chacun desdits commutateurs (SW1...SW4) dudit premier circuit de commutation (SWC1) est connecté à ladite tension d'entrée analogique (Vin) et à une tension de référence (Vdd/2) ;
chacun desdits commutateurs (SW9...SW12) dudit second circuit de commutation (SWC3) est connecté à une sortie dudit premier amplificateur inverseur (INV1) et à ladite tension de référence.

2. Circuit de multiplication selon la revendication 1, comprenant, en outre, des condensateurs mis à la masse (CG) et connectés entre une sortie dudit premier amplificateur inverseur (INV1) et une masse, et entre une sortie dudit second amplificateur inverseur (INV2) et ladite masse ;

un premier diviseur de tension ayant des première et seconde résistances (RE11, RE12), ladite première résistance (RE11) étant connectée entre une sortie de l'un desdits inverseurs MOS, autre que le dernier (I13) desdits inverseurs MOS dudit premier amplificateur inverseur (INV1), et une tension d'alimentation (Vdd), ladite seconde résistance (RE12) étant connectée entre ladite sortie et ladite masse ;
un second diviseur de tension ayant des première et seconde résistances (RE21, RE22), ladite première résistance (RE21) étant connectée entre une sortie de l'un desdits inverseurs MOS, autre que le dernier (I23) desdits inverseurs MOS dudit second amplificateur inverseur (INV2), et ladite tension d'alimentation (Vdd), ladite seconde résistance (RE22) étant connectée entre ladite sortie et ladite masse ;
un premier condensateur de rétroaction (CF1) destiné à connecter lesdites sortie et entrée desdits premiers amplificateurs inverseurs (INV1) ; et
un second condensateur de rétroaction (CF2) destiné à connecter lesdites sortie et entrée desdits seconds amplificateurs inverseurs (INV2).

3. Circuit de multiplication selon la revendication 2, dans lequel lesdits premier et second couplages capacitifs (CP1, CP2) ont des capacités (C1...C4, C9...C12) correspondant aux poids des chiffres d'un nombre binaire.

4. Circuit de multiplication selon la revendication 3, dans lequel chacun desdits premier et second couplages capacitifs (CP1, CP2) comprend, en outre, un condensateur additionnel (CG12, CG22) ayant une capacité égale à ladite capacité dudit condensateur du bit le moins significatif dudit nombre binaire, une borne d'entrée dudit condensateur additionnel (CG12, CG22) étant connectée à ladite masse.

5. Circuit de multiplication selon l'une des revendications 2 à 4, dans lequel lesdits premier et second condensateurs de rétroaction (CF1, CF2) ont des capacités respectivement égales aux capacités totales desdits premier et second couplages capacitifs (CP1, CP2).

6. Circuit de multiplication selon la revendication 1, comprenant, en outre :

un premier groupe de condensateurs de rétroaction (CF1), une borne de sortie de chaque condensateur dudit premier groupe (CF1) étant connectée auxdits condensateurs (C1...C4) dudit premier couplage capacitif (CP1) ;
un troisième circuit de commutation (SWC2) ayant une pluralité de commutateurs (SW5...SW8) correspondant auxdits condensateurs (C5...C8) dudit premier groupe (CF1), chaque dit commutateur connectant une borne d'entrée du condensateur correspondant, soit à une borne de sortie dudit premier amplificateur inverseur (INV1), soit à ladite tension de référence (Vdd/2) ;
un second groupe de condensateurs de rétroaction (CF2), une borne de sortie de chaque condensateur dudit premier groupe (CF2) étant connectée auxdits condensateurs (C9...C12) dudit second couplage capacitif (CP2) ;
ledit circuit générateur de tension de référence (Vref) comprenant :

a) un nombre impair d'inverseurs MOS (I1', I2', I3') connectés en série et formés de façon adjacente auxdits inverseurs MOS desdits premier et second amplificateurs inverseurs (INV1, INV2),
b) un condensateur mis à la masse (CG') et connecté entre une sortie du dernier (I3') desdits inverseurs MOS et une masse,
c) un diviseur de tension ayant des première et seconde résistances (RE1', RE2'), ladite première résistance (RE1') étant connectée entre une sortie de l'un desdits inverseurs MOS, autre que ledit dernier (I3') desdits inverseurs MOS, et une tension d'alimentation (Vdd), ladite seconde résistance (RE2') étant connectée entre ladite sortie et ladite masse, et
d) une ligne de rétroaction connectant ladite sortie du dernier (I3') desdits inverseurs MOS à une entrée du premier (I1') desdits inverseurs MOS.

7. Circuit de multiplication selon la revendication 6, comprenant, en outre :

des condensateurs mis à la masse (CG) et connectés entre une sortie dudit premier amplificateur inverseur (INV1) et ladite masse, et entre une sortie dudit second amplificateur inverseur (INV2) et la masse ;
un premier diviseur de tension ayant des première et seconde résistances (RE1, RE2), ladite première résistance (RE1) étant connectée entre une sortie de l'un desdits inverseurs MOS, autre que le dernier (I3) desdits inverseurs MOS dudit premier amplificateur inverseur (INV1), et une tension d'alimentation (Vdd), ladite seconde résistance (RE2) étant connectée entre ladite sortie et ladite masse ; et
un second diviseur de tension ayant des première et seconde résistances (RE1, RE2), ladite première résistance (RE1) étant connectée entre une sortie de l'un desdits inverseurs MOS, autre que le dernier (I3) desdits inverseurs MOS dudit second amplificateur inverseur (INV2), et ladite tension d'alimentation (Vdd), ladite seconde résistance (RE2) étant connectée entre ladite sortie et ladite masse ;

8. Circuit de multiplication selon l'une des revendications 1 à 7, dans lequel ladite tension de référence est la moitié de ladite tension d'alimentation (Vdd).

9. Circuit de multiplication selon l'une des revendications 1 à 8, comprenant, en outre, des commutateurs de rafraîchissement (SW21) destinés à connecter lesdites entrée et sortie desdits premier et second amplificateurs inverseurs (INV1, INV2), respectivement, et un commutateur fictif (SW31) équivalent audit commutateur de rafraîchissement, et destiné à connecter constamment ladite sortie dudit dernier desdits inverseurs MOS (I3') et ladite entrée dudit premier desdits inverseurs MOS (I1') dans ledit circuit générateur de tension de référence (Vref).

Figure 1

Figure 2

Figure 3

Figure 4

Figure 5

Figure 6